# EUROPÄISCHE PATENTANMELDUNG

(11) **EP 4 332 549 A1**
(43) Veröffentlichungstag der Anmeldung: **06.03.2024**
(21) Anmeldenummer: 23194347.3
(22) Anmeldetag: 30.08.2023
(51) Int. Cl.: G01N 21/27, G01N 21/64

(54) **REFERENZ-MESSUNG ZUR BESTIMMUNG EINER ABKLINGZEIT EINER LUMINESZENZ EINER PROBE**

(30) Priorität: 31.08.2022 DE 102022122092
(71) Anmelder: PyroScience GmbH, 52072 Aachen (DE)
(72) Erfinder: Thar, Roland, 52072 Aachen (DE)
(74) Vertreter: Jostarndt Patentanwalts-AG

(57) **Zusammenfassung**

Die Erfindung betrifft ein Verfahren und eine Vorrichtung zur Bestimmung einer Abklingzeit einer Lumineszenz einer Probe, umfassend folgende Schritte:
- Anregen einer Lichtquelle mittels eines Anregungsstroms einer Stromquelle;
- Bestrahlen der Probe mit einem Licht einer Wellenlänge, die zur Anregung von Lumineszenz in der Probe geeignet ist, wobei die Bestrahlungsintensität periodisch variiert wird;
- Messen eines von der Probe emittierten Lichts, Erzeugen eines ersten elektrischen Signals in Abhängigkeit des von der Probe emittierten Lichts und Verstärken des ersten elektrischen Signals;
- Erfassen einer ersten Phasendifferenz zwischen dem Anregungsstrom und dem verstärkten ersten elektrischen Signal;
- Erzeugen eines zweiten elektrischen Signals, wobei das zweite elektrische Signal direkt aus dem Anregungsstrom der Stromquelle erzeugt wird und anschließend verstärkt wird;
- Erfassen einer zweiten Phasendifferenz zwischen dem Anregungsstrom und dem verstärkten zweiten elektrischen Signal; und
- Bestimmung der Abklingzeit der Lumineszenz der Probe anhand einer Phasendifferenz zwischen dem Anregungsstrom und der Lichtemission der Probe.

## Beschreibung

Die Erfindung betrifft ein Verfahren zur Bestimmung der Lumineszenz einer Probe, wobei die Probe mit einem Licht einer Wellenlänge bestrahlt wird, die zur Anregung von Lumineszenz in der Probe geeignet ist, und das von der Probe emittierte Licht in einem Empfänger gemessen wird, wobei die Lumineszenz der Probe aus einer Phasendifferenz zwischen dem Anregungssignal und der Lichtemission der Probe ermittelt wird. Weiter bezieht sich die Erfindung auf eine Vorrichtung zur Bestimmung einer Lumineszenz einer Probe, umfassend eine Probe, eine mA-Stromquelle, eine Lichtquelle mit einem Halbleitermaterial mit einem ersten Bandabstand, der zur Erzeugung eines Lichts einer Wellenlänge, die zur Anregung von Lumineszenz in der Probe ausreicht, geeignet ist, einen Transimpedanzverstärker, einen Schalter, ein Mittel zum elektrischen Erzeugen eines Referenzsignals, eine Auswerteeinheit und eine Steuereinheit.

Ein derartiges Verfahren und eine Vorrichtung sind beispielsweise aus WO 2007/068021 bekannt. Bei dem hierin offenbarten Verfahren wird ein Referenzlicht auf einen Empfänger zur Erzeugung eines Referenzsignals gesendet, um Umgebungseinflüsse zu kompensieren. Dabei wird darauf geachtet, dass der optische Weg des Referenzlichts von dem optischen Weg des in die Probe eintretenden und die Probe verlassenden Fluoreszenzlichts beispielsweise durch ein optisches Filter getrennt wird.

Aufgabe von Ausführungsformen der Erfindung ist es, ein Verfahren, das die Nachteile bisher etablierter Technologien überwindet und die Messgenauigkeit erhöht sowie eine Vorrichtung, die zur Durchführung des Verfahrens geeignet ist und besonders kleinbauend ausgeführt werden kann, bereitzustellen.

Der Anwendungsbereich von Lumineszenzmessungen ist breit und reicht von Materialcharakterisierung im Labor über medizinische Diagnostik und Umweltanalyse bis zu zahlreichen industriellen Prozessen. Von besonderem Interesse ist der Anwendungsbereich optischer Sauerstoffsensoren, die auf Farbstoffen basieren, deren Lumineszenz abhängig vom Sauerstoff-Partialdruck ist.

Eine simple Form der Lumineszenzmessung basiert auf einer Anregung einer Probe mit einem Lichtblitz und anschließender Analyse der Lumineszenz-Antwort. Die Photonen regen eine Probe an, indem sie bei einem Absorptionsvorgang ihre Energie (hv) übergeben. Findet die anschließende Desaktivierung der Probe unter Aussenden von Licht statt, so spricht man von Photolumineszenz. Die Dauer zwischen Anregung und Desaktivierung der Probe wird als Lebensdauer oder bei Fluorophoren als Fluoreszenzlebensdauer bezeichnet und findet im Fall von Fluorophoren allgemein recht schnell (innerhalb einer Millionstel Sekunde) statt, da es sich bei der Photolumineszenz in Fluorophoren um einen gemäß den Regeln der Quantenmechanik "erlaubten" Zustandsübergang handelt. In den meisten Fällen weist die Lumineszenz gegenüber dem Anregungslicht eine Verschiebung in Richtung des langwelligeren Spektrums auf (Stokessche Regel). Ein Grund liegt darin, dass bei der Anregung durch die Photonen zunächst höhere Schwingungszustände erreicht werden, von denen aus ein Teil der Energie in Form von Schwingungsrelaxationen oder Phononen an die Umgebung abgegeben wird. Bei anschließendem Übergang in einen niederenergetischeren Zustand sendet die Probe ein Photon mit entsprechend niedrigerer Energie aus, also Licht mit größerer Wellenlänge. Es kann jedoch auch vorkommen, dass ein Fluorophor so viel Energie abgibt, wie er zuvor aufgenommen hat (Resonanzfluoreszenz).

Die Quantenausbeute, also das Verhältnis von emittierten Photonen zu absorbierten Photonen, kann durch nichtstrahlende Desaktivierungsprozesse beeinträchtigt werden. Die Häufigkeit der nichtstrahlenden Prozesse nimmt bei Vorhandensein bestimmter Stoffe, sogenannter Quencher, zu. Dies ist im Kontext optischer Sauerstoffsensoren interessant, da es sich bei molekularem Sauerstoff (O₂) um einen Quencher handelt. Über die Stern-Volmer-Gleichung kann die Abhängigkeit der Quantenausbeute zur Konzentration des jeweiligen Quenchers beschrieben werden.

Nach Anregung einer lumineszierenden Probe mit einem Lichtblitz, erzeugt die Probe eine exponentiell abklingende Lumineszenz-Antwort. Die Abklingzeit ist quantitativ abhängig von der Quantenausbeute. Eine Kontrolleinheit ermittelt aus der Exponentialkurve die Abklingzeit. Aufgrund der zuvor genannten sehr geringen Lebensdauern, insbesondere bei Fluorophoren, wird eine sehr große Verstärkerbandbreite benötigt, um eine Zeitauflösung zu erreichen, die hoch genug ist, um die Abklingzeit mit ausreichender Präzision zu erfassen.

Um die Verstärkerbandbreite geringer halten zu können und die Anwendung damit robuster zu machen, wurde die Phasenmesstechnik etabliert. Dabei wird die zur Anregung genutzte Lichtquelle periodisch angesteuert, beispielsweise mit einer Rechteckfunktion oder sinusförmig. Die Periodendauer muss dabei in etwa in der Größenordnung der Lebensdauer der zu analysierenden Lumineszenz liegen. Die Lumineszenz-Antwort wird nun in ihrer Intensität ebenfalls periodisch variiert. Die Antwort weist gegenüber dem Anregungssignal eine Phasenverschiebung *d*Φ*₁* auf. Die Phasenverschiebung *d*Φ der Probe ist mit der Abklingzeit rund der Anregungsfrequenz *ƒ* über folgende Beziehung verknüpft: *d*Φ = arctan(2 *πƒ τ*). Daraus folgt für die Abklingzeit *τ* = tan(*d*Φ)/(2 *πƒ*) bzw. näherungsweise *τ* = *d*Φ/(2 *πƒ*) bei genügend kleiner Phasenverschiebung. Die gemessene Phasenverschiebung *d*Φ*₁* enthält neben der Phasenverschiebung *d*Φ noch weitere Phasenverschiebungen. Aufgrund des im Allgemeinen sehr schwachen emittierten Lichts wird eine hohe Verstärkung benötigt. Gerade ökonomisch attraktive Lösungen addieren jedoch einen nicht vernachlässigbaren temperaturabhängigen Offset, der in die gemessene Phasenverschiebung *d*Φ*₁* miteinfließt und den größten Störfaktor der weiteren Phasenverschiebungen darstellt. Die Temperaturabhängigkeit des Offsets und produktionstechnische Schwankungen der Verstärker verhindern eine rein rechnerische Eliminierung aus der gemessenen Phasenverschiebung *d*Φ*₁*.

Üblicherweise wird neben der ersten Lichtquelle, die zur Anregung der Lumineszenz dient, eine weitere Lichtquelle verwendet, deren Licht beispielsweise über Lichtwellenleiter und/oder optische Filter auf den Photodetektor gerichtet wird, ohne die Probe dabei anzuregen. Wichtig ist dabei, dass das von der Referenzlichtquelle erzeugte Licht genügend abgeschwächt wird, um eine Beschädigung des Photodetektors zu vermeiden und Sättigungseffekten vorzubeugen. Produktions- und temperaturbedingte Schwankungen des Farborts und der Intensität von LEDs, insbesondere im Low-Cost-Sektor, verschlechtern die Messung zusätzlich. Zudem ist der Mehraufwand der Entwicklung und des Trimmens des Referenzpfads hinderlich, wenn eine Miniaturisierung der Messvorrichtung angestrebt wird.

Aufgabe der vorliegenden Erfindung ist es, ein Verfahren und eine Vorrichtung bereitzustellen, die die vorstehend beschriebenen Nachteile des Standes der Technik vermeiden. Erfindungsgemäß wird diese Aufgabe durch ein Verfahren mit den Merkmalen des unabhängigen Anspruchs 1 und durch eine Vorrichtung mit den Merkmalen des unabhängigen Anspruchs 5 gelöst. Vorteilhafte Ausführungsformen ergeben sich aus den abhängigen Ansprüchen.

Das vorgeschlagene Verfahren zur Bestimmung einer Abklingzeit einer Lumineszenz einer Probe, umfasst folgende Schritte:
- Anregen einer Lichtquelle mittels eines Anregungsstroms einer Stromquelle, wobei der Betrag des Anregungsstroms der Stromquelle mit der Frequenz *ƒ* zwischen einem Minimalbetrag und einem Maximalbetrag periodisch, insbesondere sinusförmig, verändert wird;
- Bestrahlen der Probe mit einem Licht einer Wellenlänge, die zur Anregung von Lumineszenz in der Probe geeignet ist, wobei die Bestrahlungsintensität periodisch, insbesondere sinusförmig, mit der Frequenz *ƒ* über mehrere Perioden variiert wird;
- Messen eines von der Probe emittierten Lichts in einem Empfänger, Erzeugen eines ersten elektrischen Signals in Abhängigkeit des von der Probe emittierten Lichts und Verstärken des ersten elektrischen Signals, wobei sich das von der Probe emittierte Licht in seiner Intensität periodisch, insbesondere sinusförmig, mit der Frequenz *ƒ* ändert, sodass sich das erste elektrische Signal in Abhängigkeit der Frequenz *ƒ* ändert;
- Erfassen einer ersten Phasendifferenz *d*Φ*₁* zwischen dem Anregungsstrom und dem verstärkten ersten elektrischen Signal;
- Erzeugen eines zweiten elektrischen Signals mit Frequenz *ƒ* zur Ermittlung der durch die Messung und Verstärkung verursachten zusätzlichen Phasenverschiebung, wobei das zweite elektrische Signal direkt ohne Zwischenschaltung einer Lichtquelle aus dem Anregungsstrom der Stromquelle erzeugt wird und anschließend verstärkt wird, wobei die Probe währenddessen nicht bestrahlt wird;
- Erfassen einer zweiten Phasendifferenz *d*Φ*₂* zwischen dem Anregungsstrom und dem verstärkten zweiten elektrischen Signal; und
- Bestimmung der Abklingzeit der Lumineszenz der Probe anhand einer Phasendifferenz *d*Φ zwischen dem Anregungsstrom und der Lichtemission der Probe, wobei die Phasendifferenz *d*Φ aus der Differenz der ersten und zweiten Phasendifferenz der verstärkten elektrischen Signale ermittelt wird: *d*Φ = *d*Φ*₁* - *d*Φ*₂.*

Ein wichtiger Vorteil dieses Verfahrens ist die Eliminierung der zweiten Lichtquelle und die rein elektrische Ausbildung des Referenzpfads, anstelle des optischen Referenzpfads, wodurch die Kalibrierung der Messvorrichtung aufgrund der fehlenden Referenzlichtquelle vereinfacht wird und die Messvorrichtung zusätzlich miniaturisiert werden kann. Die Erzeugung des zweiten elektrischen Signals aus dem Anregungsstrom der Stromquelle kann beispielsweise kapazitiv oder induktiv erfolgen. Bei dem periodischen Anregungssignal kann es sich vorzugsweise um ein Rect-Signal, ein Sägezahnsignal, ein trapezförmiges Signal oder ein Dreiecksignal und insbesondere um ein Sinus-Signal handeln, wobei der resultierende Anregungsstrom zwischen *Iₘᵢₙ* und *Iₘₐₓ* variiert wird und *Iₘᵢₙ* insbesondere nicht negativ wird. Vorzugsweise wird *Iₘᵢₙ* anhand eines Datenblatts einer LED beziehungsweise einer LASER-Diode so dimensioniert, dass die LED im linearen Bereich betrieben wird, also oberhalb der Grenze zu nichtstrahlenden Rekombinationsprozessen im p-n-Übergangsbereich, beziehungsweise die LASER-Diode so angesteuert wird, dass die stimulierten Emissionsprozesse in der LASER-Diode nicht oder nur kurz aussetzen. Bei Verwendung einer LASER-Diode muss der Maximalbetrag *Iₘₐₓ* zusätzlich so klein gewählt werden, dass eine Zerstörung der spiegelnden Endflächen des LASERs vermieden wird.

Besonders bevorzugt ist es, wenn das zweite elektrische Signal über eine induktive Kopplung aus dem Anregungsstrom erzeugt wird, wobei es sich bei dem zweiten elektrischen Signal um ein nA-Stromsignal handelt. Dadurch werden verstärkerseitige Sättigungseffekte vermieden und eine Beschädigung der Messschaltung verhindert.

Die induktive Kopplung kann vorzugsweise durch einen Transformator mit passendem Windungszahlverhältnis oder durch zwei in wohldefiniertem kleinem Abstand zueinander parallel verlaufende Leiterbahnabschnitte realisiert werden.

Erfindungsgemäß ist es ganz besonders bevorzugt, dass die induktive Kopplung durch Ausnutzung einer parasitären Induktivität eines ersten Vias realisiert wird, indem der Anregungsstrom durch das erste Via ein magnetisches Feld um das erste Via aufbaut, wobei ein zweites Via in definiertem Abstand zum ersten Via angeordnet ist, sodass im zweiten Via aufgrund einer Änderung des magnetischen Feldes des ersten Vias das zweite elektrische Signal als ein Stromsignal gemäß der Lenzschen Regel im zweiten Via induziert wird. Somit wird das Miniaturisierungspotenzial weiter ausgeschöpft und eine Beeinflussung weiterer Schaltungsteile und Leiterbahnen reduziert, da das um das erste Via aufgebaute Magnetfeld so orientiert ist, dass es hauptsächlich mit anderen Vias wechselwirkt. Dies ist gerade im Kontext der Lumineszenzmessung interessant, da das erste elektrische Signal und das zweite elektrische Signal in ihrer Amplitude so gering sind, dass alle Rauschquellen so stark wie möglich unterdrückt werden müssen. Der Abstand beträgt vorzugsweise 10 µm bis 10 mm, insbesondere 100 µm bis 5 mm.

Die vorgeschlagene Vorrichtung zur Durchführung eines Verfahrens zur Bestimmung einer Lumineszenz einer Probe weist eine Probe, eine mA-Stromquelle, eine Lichtquelle mit einem Halbleitermaterial mit einem ersten Bandabstand, der zur Erzeugung eines Lichts einer Wellenlänge, die zur Anregung von Lumineszenz in der Probe ausreicht, geeignet ist, einen Photodetektor, der für eine Messung eines von der Probe aufgrund von Lumineszenz emittierten Lichts geeignet ist, einen Transimpedanzverstärker, einen Schalter, ein Mittel zur elektrischen Erzeugung eines Referenzsignals, eine Auswerteeinheit und eine Steuereinheit auf. Um die Verfahrensschritte durchzuführen, kontrolliert die Steuereinheit über eine Eingangsspannung die mA-Stromquelle so, dass ihr Ausgangsstrom zwischen einem Maximalwert *Iₘₐₓ* und einem Minimalwert *Iₘᵢₙ* periodisch, insbesondere sinusförmig, mit der Frequenz *ƒ* variiert. Dies kann vorzugsweise über einen Digital-Analog-Converter (DAC) eines Microcontrollers, der am Gate beziehungsweise an der Basis eines Transistors, insbesondere an der Basis eines Bipolar Junction Transistors (BJTs) oder am Gate eines Feldeffekttransistors, anliegt, und ihn um einen geeigneten Betriebspunkt herum periodisch, vorzugsweise sinusförmig, ansteuert, geschehen. Vorzugsweise steuert der DAC die Lichtquelle über einen Spannung-Strom-Wandler, bestehend aus Operationsverstärker und BJT, an. Alternativ ist es denkbar, ein Gate eines MOSFETs über Pulsweitenmodulation (PWM) so anzusteuern, dass der resultierende Strom sinusförmig zwischen *Iₘᵢₙ* und *Iₘₐₓ* variiert wird. Weiter ist es möglich, eine vorgefertigte spannungsgesteuerte Stromquelle in Form eines dedizierten integrierten Schaltkreises (IC) zu verwenden. Die Steuereinheit ist in der Lage, den Schalter so anzusteuern, dass die mA-Stromquelle entweder mit der Lichtquelle oder mit dem Mittel zur elektrischen Erzeugung des Referenzsignals verbunden ist. In der ersten Schalterstellung löst die mA-Stromquelle mit der Frequenz *ƒ* Lichtblitze durch die Lichtquelle aus. Über den Betrag der Stromstärke wird die Intensität des emittierten Lichts der Lichtquelle bzw. die Anzahl der emittierten Photonen einer ersten Energie (*hv₁*) variiert. Die Lichtquelle emittiert vorzugsweise Licht mit einer Wellenlänge von 420 nm bis 650 nm. Wenn die Photonen auf die Probe treffen, geben sie ihre Energie (*hν₁*) dabei ab und regen die Probe energetisch an. Anschließend emittiert die Probe bei der Desaktivierung Photonen der Energie (*hv₂*), die geringer oder gleich der ersten Energie (*hν₁*) sein kann. Die Anzahl der von der Probe emittierten Photonen ist dabei im Allgemeinen deutlich geringer als die Anzahl der von der Lichtquelle abgegebenen Photonen, ist jedoch proportional zu ihr. Der auf die Probe gerichtete Photodetektor erfasst die Photonen der Energie (*hν₂*) und erzeugt einen Photostrom in Abhängigkeit der Anzahl der aufgefangenen Photonen. Der Photostrom dient im Kontext des vorgeschlagenen Verfahrens als erstes elektrisches Signal, wobei die Amplitude des Signals von der Anzahl der von der Probe emittierten Photonen, und damit von der Anzahl der auf die Probe treffenden Photonen und der Häufigkeit nichtstrahlender Desaktivierungsprozesse, abhängt, und sich das Signal mit der Frequenz *ƒ* ändert. Aufgrund der in guter Näherung vernachlässigbaren Reisedauer der Photonen und der geringen "Reaktionszeit" des Photodetektors weist das elektrische Signal (der Photostrom) vor der Verstärkung hauptsächlich eine durch die Lumineszenz bedingte Phasenverschiebung gegenüber dem Anregungsstrom auf. Der Photostrom wird anschließend von dem Transimpedanzverstärker verstärkt in eine Spannung umgewandelt. Dieses verstärkte erste elektrische Signal enthält durch den produktions- und temperaturbedingten Offset des Transimpedanzverstärkers eine weitere Phasendifferenz gegenüber dem Signal vor der Verstärkung. Die Auswerteeinheit erfasst die gesamte Phasendifferenz *d*Φ*₁* zwischen dem Anregungsstrom und dem verstärkten ersten Signal und speichert sie in einem ersten Register. Die Auswerteeinheit und die Steuereinheit können zum Beispiel in einem gemeinsamen Mikrocontroller befindlich sein. Um die eigentliche lumineszenzbedingte Phasenverschiebung *d*Φ zu ermitteln, stellt die Steuereinheit nach Abspeicherung der ersten Phasenverschiebung *d*Φ*₁* den Schalter in die zweite Stellung, in der die mA-Stromquelle mit dem Mittel zur elektrischen Erzeugung des Referenzsignals verbunden ist. Dass das Mittel das Referenzsignal elektrisch erzeugt, bedeutet dabei, dass das Referenzsignal entweder kapazitiv, induktiv oder resistiv erzeugt wird. Es kann sinnvoll sein, die mA-Stromquelle während des Umschaltvorgangs auszustellen, um potenziell gefährliche Spannungsspitzen zu vermeiden. Es ist darauf zu achten, dass das Referenzsignal, bei dem es sich im Kontext des Verfahrens um das zweite elektrische Signal handelt, ebenfalls ein Stromsignal ist, dessen Amplitude in der Größenordnung der Amplitude des Photostroms zu liegen hat. Dies kann durch simulationsgestütztes Dimensionieren des Mittels zur elektrischen Erzeugung des Referenzsignals erfolgen. Das zweite elektrische Signal wird an den Eingang des Transimpedanzverstärkers geführt und verstärkt. Anschließend erfasst die Auswerteeinheit die Phasenverschiebung *d*Φ*₂* zwischen dem verstärkten zweiten elektrischen Signal und dem Anregungsstrom und speichert sie in einem zweiten Register. Die eigentliche lumineszenzbedingte Phasenverschiebung wird dann aus der Differenz der gespeicherten Phasenverschiebungen errechnet: *d*Φ = *d*Φ*₁* - *d*Φ*₂.* Ein Vorteil dieser Vorrichtung liegt darin, dass sie ein hohes Miniaturisierungspotenzial aufweist und daher besonders kleinbauend ausgeführt werden kann. Zusätzlich ist die Vorrichtung leichter in Betrieb zu nehmen, da ein aufwändiger Abstimmungsprozess des Referenzpfads nicht erforderlich ist. Da es sich bei der mA-Stromquelle um eine spannungsgesteuerte Stromquelle handelt, wird genau genommen die Phasenverschiebung zwischen der ansteuernden Spannung und den verstärkten elektrischen Signalen erfasst. Weil jedoch dieselbe Stromquelle für die Erzeugung des ersten und des zweiten elektrischen Signals verwendet wird, wird auch die Phasenverschiebung der spannungsgesteuerten Stromquelle durch das Verfahren zuverlässig eliminiert.

Bevorzugterweise ist die Lichtquelle als eine LED oder eine LASER-Diode ausgebildet. LEDs zeichnen sich durch ihre hohe Verfügbarkeit und geringe Stückkosten aus. Bei Vorrichtungen, bei denen eine besonders geringe Abweichung von der Hauptwellenlänge gefordert ist, also ein idealerweise monochromatisches Licht gefordert ist, ist die Verwendung einer LASER-Diode bevorzugt. Sowohl LEDs als auch LASER-Dioden sind in kleinem Formfaktor als SMD-Bauteile erhältlich und können somit zur Miniaturisierung beitragen. Beispielsweise können die LEDs oder die LASER-Dioden auf Silizium oder einem III-V-Verbindungshalbleitermaterial basieren. Die Hauptwellenlänge kann dabei je nach Anwendungsfall im Bereich zwischen dem nahinfraroten und dem langwelligen UV-Licht, insbesondere zwischen 420 nm und 650 nm, liegen. Vorzugsweise wird der Minimalbetrag *Iₘᵢₙ* des Anregungsstroms mithilfe des Datenblatts der LED oder der LASER-Diode so dimensioniert, dass die LED im linearen Bereich betrieben wird, also oberhalb der Grenze zu nichtstrahlenden Rekombinationsprozessen im p-n-Übergangsbereich, beziehungsweise die LASER-Diode so angesteuert wird, dass die stimulierten Emissionsprozesse in der LASER-Diode nicht oder nur kurz aussetzen. Bei Verwendung einer LASER-Diode muss der Maximalbetrag *Iₘₐₓ* zusätzlich so klein gewählt werden, dass eine Zerstörung der spiegelnden Endflächen des LASERs vermieden wird.

Vorteilhafterweise weist das Mittel zur elektrischen Erzeugung des Referenzsignals einen Transformator auf, wobei die Primärseite in einer durch die Steuereinheit kontrollierbaren Schalterstellung mit der mA-Stromquelle verbunden ist und die Sekundärseite mit dem Eingang des Transimpedanzverstärkers elektrisch verbunden ist, wobei ein Windungszahlverhältnis des Transformators so gewählt ist, dass eine Amplitude des sekundärseitig fließenden Stroms nicht größer als das 10-Fache einer Amplitude eines durch den Photodetektor erzeugten Stroms beträgt. Dies bedeutet, dass die Amplitude des zweiten elektrischen Signals nicht beliebig groß werden darf. Anderenfalls droht eine Beschädigung des Transimpedanzverstärkers oder der Auswerteeinheit. Zusätzlich darf der sekundärseitig fließende Strom nicht beliebig klein werden, damit er noch zuverlässig von der Auswerteeinheit nach der Verstärkung gemessen werden kann. Die Amplitude des zweiten elektrischen Signals beträgt dafür nicht weniger als beispielsweise 75 % der Amplitude des ersten elektrischen Signals.

Es ist alternativ dazu besonders bevorzugt, wenn das Mittel zur elektrischen Erzeugung zwei in definiertem Abstand angeordnete Vias aufweist, wobei das erste Via in einer durch die Steuereinheit kontrollierbaren Schalterstellung mit der mA-Stromquelle verbunden ist und das zweite Via mit dem Eingang des Transimpedanzverstärkers elektrisch verbunden ist, wobei die Länge der Vias und der Abstand der Vias voneinander so gewählt sind, dass eine Amplitude des im zweiten Via fließenden Stroms nicht größer als das 10-Fache einer Amplitude eines durch den Photodetektor erzeugten Stroms beträgt. Hier darf der im zweiten Via fließende Strom ebenfalls nicht beliebig klein werden, damit er noch zuverlässig von der Auswerteeinheit nach der Verstärkung erfasst werden kann. Die Amplitude des zweiten elektrischen Signals beträgt dafür nicht weniger als beispielsweise 75 % der Amplitude des ersten elektrischen Signals. Die Induktivität eines Vias ist im Allgemeinen eine parasitäre Eigenschaft, durch die in vielen Leiterplatten ungewolltes Rauschen eingekoppelt wird. Um den Effekt ausnutzen zu können, wird die Signalübertragung zwischen zwei Vias folgendermaßen analysiert: Bei einem beispielsweise zweilagigen Printed Circuit Board (PCB) reicht das Via von der Ober- zur Unterseite. Bei dem Via handelt es sich um einen Hohlraum im PCB, dessen Oberfläche mit Kupfer überzogen ist. Bei vorhandener Bottom- und Top-Plane bildet sich zwischen den Vias, ausgehend vom ersten Via eine Transversale Magnetische Mode aus. Mit den Randbedingungen, dass in elektrischen Leitern keine Felder existieren und die Feldlinien horizontal auf die Leiter treffen, ergibt sich für die z-Komponente des zur TM-Mode gehörenden E-Feldes *E^{z}ₗₙ*(*r,ϕ,z*) = -j*Bₗₙ k²ᵣₗ*/(*ωµε*) *H⁽²⁾ₙ*(*kᵣₗr*) cos(*nϕ*) cos(*lπ*/*h z*), mit Wellenzahl *kᵣₗ* = sqrt(*ω*²*µε* - *(lπ*/*h*)²). Dabei handelt es sich bei *H⁽²⁾ₙ* um eine Hankel-Funktion der zweiten Art, n-ter Ordnung und bei *Bₗₙ* um den konstanten Gewichtungsfaktor der zugehörenden (I,n)-Mode. Die Hankel-Funktion beschreibt hier die Dämpfung im Verhältnis zum Abstand *r* zum ersten Via. *µ* und *ε* stehen für die Permeabilität und die Permittivität des Ausbreitungsmediums, im Falle eines PCBs beträgt *µ* ≈ *µ₀* und *ε ≈ 3.8ε₀. ω* = *2π ƒ steht* für die Kreisfrequenz, *h* für die Dicke der Leiterplatte und *l* und *n* geben die Ordnung der Mode an. Im Fall einer zweilagigen Leiterplatte entspricht *h* zudem der Länge der Vias. Dabei sind nicht alle Moden ausbreitungsfähig. Zudem muss die durch Nullsetzen von *kᵣₗ* ermittelbare Cutoff-Frequenz berücksichtigt werden, oberhalb der die Signaldämpfung zu stark wird. Mithilfe dieser Zusammenhänge und der Maxwellschen Gleichungen in Verbindung mit dem spezifischen Widerstand von Kupfer ist es möglich, die Vias so voneinander zu beabstanden und die Länge der Vias so zu dimensionieren, dass der im zweiten Via induzierte Strom in der Größenordnung des Photostroms liegt. So kann der Abstand vorzugsweise 10 µm bis 10 mm, insbesondere 100 µm bis 5 mm, betragen.

Vorteilhafterweise handelt es sich bei dem Photodetektor bzw. bei dem Empfänger um eine Photodiode, eine Avalanche-Photodiode oder einen Photomultiplier. Die Photodiode ist in Anwendungen mit besonders vielen von der Probe emittierten Photonen bevorzugt. Beim Vorhandensein einer höheren Quencher-Konzentration kann jedoch die Verwendung von Avalanche-Photodioden erforderlich sein, um die Anzahl emittierter Photonen aussagekräftig zu quantifizieren. Die Verwendung von Avalanche-Photodioden und einfachen Photodioden ist gerade bei den Lösungen sinnvoll, die das Miniaturisierungspotenzial der Vorrichtung in Gänze ausnutzen sollen. Beispielsweise können auf Silizium basierende Photodioden für sichtbares Licht und nahes Infrarotlicht verwendet werden. Anderenfalls können III-V-Halbleitermaterialien verwendet werden, deren Zusammensetzung für den jeweiligen Anwendungsfall angepasst ist, beispielsweise AlGaN für UV-Licht oder InSb für IR-Licht. Sollen jedoch einzelne Photonen zuverlässig detektiert werden, stellt die Verwendung eines Photomultipliers eine gute Lösung dar.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: ein Verlaufsdiagramm der wesentlichen Verfahrensschritte einer Ausführungsform des erfindungsgemäßen Verfahrens;
- Fig. 2: eine Prinzipdarstellung der Schaltung einer Ausführungsform der erfindungsgemäßen Vorrichtung.

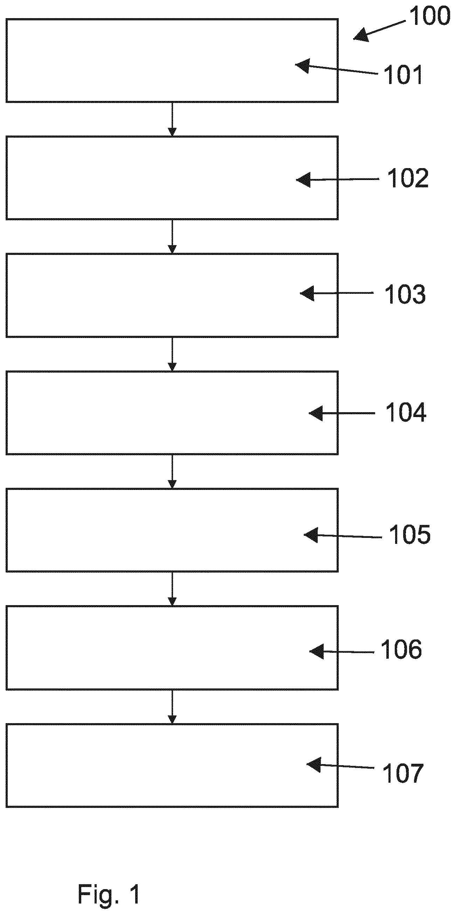

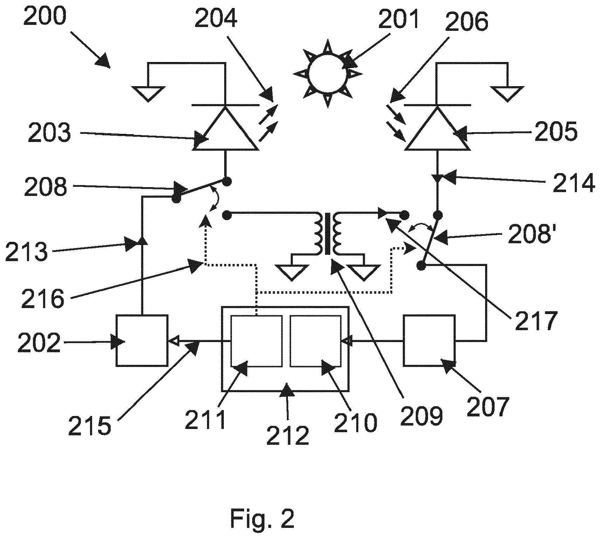

Das Verlaufsdiagramm 100 in Fig. 1 zeigt die wesentlichen Verfahrensschritte einer Ausführungsform des erfindungsgemäßen Verfahrens zur Ermittlung der Lumineszenz einer Probe 201, wie es beispielsweise mit der in Fig. 2 dargestellten Vorrichtung 200 ausgeführt werden kann. Die Vorrichtung 200 umfasst eine Probe 201, eine mA-Stromquelle 202, eine Lichtquelle 203, einen Photodetektor 205, einen Transimpedanzverstärker 207, einen Schalter 208, ein Mittel 209 zur elektrischen Erzeugung eines Referenzsignals, eine Auswerteeinheit 210 und eine Steuereinheit 211.

In einem ersten Schritt 101 wird die Lichtquelle 203, bei der es sich beispielsweise um eine LED oder eine LASER-Diode handelt, mittels eines Anregungsstroms 213 angeregt und Licht einer ersten Wellenlänge 204 emittiert. Der Betrag des Anregungsstroms 213 der mA-Stromquelle 202 wird dabei sinusförmig mit der Frequenz *f* zwischen einem Minimalbetrag und einem Maximalbetrag verändert. Die Frequenz und Amplitude des Ansteuerstroms 213 können beispielswiese über eine pulsweitenmodulierte Ansteuerspannung 215 variiert werden.

Im nächsten Schritt 102 treffen die von der Lichtquelle 203 ausgesandten Photonen einer ersten Energie, bzw. das Licht einer ersten Wellenlänge 204 auf die Probe 201 und regen bzw. regt diese an. Die Wellenlänge beträgt hier beispielsweise 620 nm. Die Anzahl der Photonen bzw. die Intensität des Lichts 204 variiert dabei aufgrund des sinusförmigen Anregungsstroms 213 ebenfalls sinusförmig mit der Frequenz *ƒ.* Bei anschließenden Desaktivierungsprozessen der Probe 201 treten nun strahlende und nichtstrahlende Desaktivierungsprozesse auf, wobei die Häufigkeit dieser nichtstrahlenden Desaktivierungsprozesse mit steigender Konzentration in der Probe 201 vorhandener Quencher, wie beispielsweise molekularer Sauerstoff (O₂), sinkt. Bei den strahlenden Desaktivierungsprozessen werden Photonen einer zweiten Energie bzw. Licht einer zweiten Wellenlänge 206 von der Probe 201 emittiert.

Im nächsten Schritt 103 wird das von der Probe 201 emittierte Licht 206 in einem Empfänger 205 gemessen und ein erstes elektrisches Signal 214 in Abhängigkeit des von der Probe 201 emittierten Lichts 206 erzeugt und verstärkt. Aufgrund der sinusförmigen Änderung der Intensität des Lichts 206 ergibt sich für das elektrische Signal 214 ebenfalls eine sinusförmige Abhängigkeit von der Frequenz *ƒ*. Der Empfänger 205 ist hier durch eine Photodiode ausgebildet, sodass es sich bei dem ersten elektrischen Signal 214 um einen Photostrom handelt. Der Photostrom kann mittels eines Transimpedanzverstärkers 207 verstärkt werden.

Im nächsten Schritt 104 wird die Phasendifferenz *d*Φ*₁* zwischen dem Anregungsstrom 213 und dem verstärkten ersten elektrischen Signal 214 erfasst. Die Auswerteeinheit 210 und Steuereinheit 211 sind hier in einem gemeinsamen Micro-Controller 212 befindlich. Der Wert der Phasenverschiebung *d*Φ*₁* kann in einfacher Weise in einem Register des Micro-Controllers 212 gespeichert werden. Es ist jedoch ebenso möglich, Auswerteeinheit 210 und Steuereinheit 211 in zwei unterschiedlichen Bauteilen unterzubringen. Dies kann vorteilhafte Auswirkungen auf das Rauschverhalten des Messteils (bestehend aus Empfänger 205, Verstärker 207, Mittel 209 zur Erzeugung des Referenzsignals und Auswerteeinheit 210) der Vorrichtung 200 haben. Die Auswerteeinheit 210 kann den Wert der Phasendifferenz beispielsweise über ein Two-Wire-Interface an die Steuereinheit 211 übermitteln oder ihn in einem eigenen Register speichern.

Während des nächsten Schritts 105 wird ein zweites elektrisches Signal durch das Mittel 209 zum elektrischen Erzeugen des Referenzsignals aus dem Anregungsstrom 213 der mA-Stromquelle 202 generiert, sodass das zweite elektrische Signal sich ebenfalls mit der Frequenz *ƒ* ändert. Dabei wird die Probe 201 währenddessen nicht bestrahlt. Zur Durchführung dieses Schritts 105 setzt die Steuereinheit 211 beispielsweise zunächst die Steuerspannung 215 zu null, sodass die mA-Stromquelle 202 keinen Strom 213 liefert. Anschließend löst die Steuereinheit 211 mittels einer weiteren Steuerspannung 216 den mindestens einen Schalter 208, 208' aus und hält ihn in seiner zweiten Schalterstellung, in der die mA-Stromquelle 202 nun nicht mehr mit der Lichtquelle 203 verbunden ist, sondern mit dem Mittel 209 zur elektrischen Erzeugung des Referenzsignals. In Fig. 2 kann beispielsweise der zweite Schalter 208` auch durch einen Kurzschluss der drei Anschlüsse ersetzt werden, ohne die Funktionsweise der Schaltung stark zu beeinflussen. Die Verwendung des zweiten Schalters 208` erhöht hier die SNR. Anschließend setzt die Steuereinheit 211 die Steuerspannung 215 zur Kontrolle der mA-Stromquelle 202 in derselben Form wie zuvor aktiv, sodass der Strom 213 durch das Mittel 209 zur elektrischen Erzeugung des Referenzsignals fließt. Das Mittel 209 arbeitet hier induktiv und ist durch zwei passend beabstandete Vias ausgebildet, sodass der Anregungsstrom 213, der durch das erste Via fließt, einen Referenzstrom 217, der als das zweite elektrische Signal dient, im zweiten Via induziert (um die induktive Kopplung zu verdeutlichen, sind in Fig. 2 die Vias durch das Symbol eines Transformators dargestellt). Der Referenzstrom 217 ändert sich in seiner Amplitude ebenfalls mit der Frequenz *ƒ* und wird vom Transimpedanzverstärker 207 verstärkt. Der Abstand der Vias beträgt hier 250 µm.

Im nächsten Schritt 106 wird die Phasendifferenz *d*Φ*₂* zwischen dem Anregungsstrom 213 und dem verstärkten zweiten elektrischen Signal, also dem verstärkten Referenzstrom 217, in der Auswerteeinheit 210 erfasst und in einem weiteren von dem ersten verschiedenen doch im selben Bauelement befindlichen Register gespeichert. Bei dem Bauelement handelt es sich um den Micro-Controller 212, sofern Auswerteeinheit 210 und Steuereinheit 211 in einem gemeinsamen Micro-Controller 212 verbaut sind, oder alternativ um die Auswerteeinheit 210 oder die Steuereinheit 211, sofern diese getrennt voneinander sind.

Anschließend wird im nächsten Schritt 107 die Abklingzeit der Lumineszenz der Probe 201 anhand einer Phasendifferenz *d*Φ zwischen dem Anregungsstrom 213 und der Lichtemission der Probe 201 bestimmt. Die Phasendifferenz *d*Φ wird dabei aus der Differenz der ersten Phasendifferenz *d*Φ*₁* und der zweiten Phasendifferenz *d*Φ*₂* der verstärkten elektrischen Signale ermittelt. Dieser Schritt 107 erfolgt beispielsweise im Micro-Controller 212 durch Subtraktion über *d*Φ = *d*Φ*₁* - *d*Φ*₂.* Ausgehend von dem Wert der Phasenverschiebung *d*Φ der Probe 201 kann anschließend auf die Abklingzeit der Lumineszenz geschlossen werden und beispielsweise über Vergleichsdaten eine Konzentration eines Quenchers mit hoher Genauigkeit bestimmt werden.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### Bezugszeichenliste:

- 100: Verlaufsdiagramm
- 101: Schritt 1
- 102: Schritt 2
- 103: Schritt 3
- 104: Schritt 4
- 105: Schritt 5
- 106: Schritt 6
- 107: Schritt 7
- 200: Vorrichtung
- 201: Probe
- 202: Stromquelle
- 203: Lichtquelle
- 204: Licht erster Wellenlänge
- 205: Photodetektor
- 206: Licht zweiter Wellenlänge
- 207: Transimpedanzverstärker
- 208: Erster Schalter
- 208': Zweiter Schalter
- 209: Mittel zur elektrischen Erzeugung
- 210: Auswerteeinheit
- 211: Steuereinheit
- 212: Micro-Controller
- 213: Anregungsstrom
- 214: Photostrom
- 215: Steuerspannung
- 216: Steuerspannung
- 217: Referenzstrom

## Patentansprüche

1. Verfahren (100) zur Bestimmung einer Abklingzeit einer Lumineszenz einer Probe (201), umfassend folgende Schritte:
- Schritt 1 (101): Anregen einer Lichtquelle (203) mittels eines Anregungsstroms (213) einer Stromquelle (202), wobei der Betrag des Anregungsstroms (213) der Stromquelle (202) mit der Frequenz *ƒ* zwischen einem Minimalbetrag und einem Maximalbetrag periodisch verändert wird;
- Schritt 2 (102): Bestrahlen der Probe (201) mit einem Licht (204) einer Wellenlänge, die zur Anregung von Lumineszenz in der Probe (201) geeignet ist, wobei die Bestrahlungsintensität periodisch mit der Frequenz *ƒ* über mehrere Perioden variiert wird;
- Schritt 3 (103): Messen eines von der Probe (201) emittierten Lichts (206) in einem Empfänger (205), Erzeugen eines ersten elektrischen Signals (214) in Abhängigkeit des von der Probe (201) emittierten Lichts (206) und Verstärken des ersten elektrischen Signals (214), wobei sich das von der Probe (201) emittierte Licht (206) in seiner Intensität periodisch mit der Frequenz *ƒ* ändert, sodass sich das erste elektrische Signal (214) in Abhängigkeit der Frequenz *ƒ* ändert;
- Schritt 4 (104): Erfassen einer ersten Phasendifferenz *d*Φ*₁* zwischen dem Anregungsstrom (213) und dem verstärkten ersten elektrischen Signal (214);
- Schritt 5 (105): Erzeugen eines zweiten elektrischen Signals (217) mit Frequenz *ƒ* zur Ermittlung der durch die Messung und Verstärkung verursachten zusätzlichen Phasenverschiebung, wobei das zweite elektrische Signal (217) direkt ohne Zwischenschaltung einer Lichtquelle aus dem Anregungsstrom (213) der Stromquelle (202) erzeugt wird und anschließend verstärkt wird, wobei die Probe (201) währenddessen nicht bestrahlt wird;
- Schritt 6 (106): Erfassen einer zweiten Phasendifferenz *d*Φ*₂* zwischen dem Anregungsstrom (213) und dem verstärkten zweiten elektrischen Signal (217); und
- Schritt 7 (107): Bestimmung der Abklingzeit der Lumineszenz der Probe (201) anhand einer Phasendifferenz *d*Φ zwischen dem Anregungsstrom (213) und der Lichtemission der Probe (201), wobei die Phasendifferenz *d*Φ aus der Differenz der ersten und zweiten Phasendifferenz der verstärkten elektrischen Signale (214, 217) ermittelt wird: *d*Φ = *d*Φ*₁* - *d*Φ*₂.*

2. Verfahren nach Anspruch 1,
**dadurch gekennzeichnet, dass** der Anregungsstrom (213) sinusförmig mit der Frequenz *ƒ* zwischen dem Minimalbetrag und Maximalbetrag verändert wird, sodass die Bestrahlungsintensität sinusförmig mit der Frequenz *ƒ* variiert wird und sich die Intensität des von der Probe (201) emittierten Lichts (206) näherungsweise sinusförmig mit der Frequenz *ƒ* ändert.

3. Verfahren nach Anspruch 1 oder 2,
**dadurch gekennzeichnet, dass** das zweite elektrische Signal (217) über eine induktive Kopplung aus dem Anregungsstrom (213) erzeugt wird, wobei es sich bei dem zweiten elektrischen Signal (217) um ein nA-Stromsignal handelt.

4. Verfahren nach Anspruch 3,
**dadurch gekennzeichnet, dass** die induktive Kopplung durch einen Transformator oder zwei in wohldefiniertem kleinem Abstand zueinander parallel verlaufende Leiterbahnabschnitte realisiert wird.

5. Verfahren nach Anspruch 3,
**dadurch gekennzeichnet, dass** die induktive Kopplung durch Ausnutzung einer parasitären Induktivität eines ersten Vias realisiert wird, indem der Anregungsstrom durch das erste Via ein magnetisches Feld um das erste Via aufbaut, wobei ein zweites Via in definiertem Abstand zum ersten Via angeordnet ist, sodass im zweiten Via aufgrund einer Änderung des magnetischen Feldes des ersten Vias das zweite elektrische Signal als ein Stromsignal gemäß der Lenzschen Regel im zweiten Via induziert wird.

6. Vorrichtung (200) zur Bestimmung einer Abklingzeit einer Lumineszenz einer Probe, aufweisend eine Probe (201), eine mA-Stromquelle (202), eine Lichtquelle (203) mit einem Halbleitermaterial mit einem ersten Bandabstand, der zur Erzeugung eines Lichts (204) einer Wellenlänge, die zur Anregung von Lumineszenz in der Probe (201) ausreicht, geeignet ist, einen Photodetektor (205), der für eine Messung eines von der Probe (201) aufgrund der Lumineszenz emittierten Lichts (206) geeignet ist, einen Transimpedanzverstärker (207), einen Schalter (208), ein Mittel (209) zur elektrischen Erzeugung eines Referenzsignals (217), eine Auswerteeinheit (210) und eine Steuereinheit (211).

7. Vorrichtung (200) nach Anspruch 6,
**dadurch gekennzeichnet, dass** die Lichtquelle (203) eine LED oder eine LASER-Diode ist.

8. Vorrichtung (200) nach Anspruch 6 oder 7,
**dadurch gekennzeichnet, dass** das Mittel (209) zur elektrischen Erzeugung einen Transformator aufweist, wobei die Primärseite in einer durch die Steuereinheit (211) kontrollierbaren Schalterstellung mit der mA-Stromquelle (202) verbunden ist und die Sekundärseite mit dem Eingang des Transimpedanzverstärkers (207) elektrisch verbunden ist, wobei ein Windungszahlverhältnis des Transformators so gewählt ist, dass eine Amplitude des sekundärseitig fließenden Stroms (217) nicht größer als das 10-Fache einer Amplitude eines durch den Photodetektor (205) erzeugten Stroms (214) beträgt.

9. Vorrichtung (200) nach Anspruch 6 oder 7,
**dadurch gekennzeichnet, dass** das Mittel (209) zur elektrischen Erzeugung zwei in definiertem Abstand angeordnete Vias aufweist, wobei das erste Via in einer durch die Steuereinheit (211) kontrollierbaren Schalterstellung mit der mA-Stromquelle (202) verbunden ist und wobei das zweite Via mit dem Eingang des Transimpedanzverstärkers (207) elektrisch verbunden ist, wobei die Länge der Vias und der Abstand der Vias voneinander so gewählt sind, dass eine Amplitude des im zweiten Via fließenden Stroms (217) nicht größer als das 10-Fache einer Amplitude eines durch den Photodetektor (205) erzeugten Stroms (214) beträgt.

10. Vorrichtung (200) nach einem der Ansprüche 6 bis 9,
**dadurch gekennzeichnet, dass** der Photodetektor (205) eine Photodiode, Avalanche-Photodiode oder ein Photomultiplier ist.
